# EUROPÄISCHE PATENTSCHRIFT

(11) **EP 3 179 586 B1**
(45) Veröffentlichungstag und Bekanntmachung des Hinweises auf die Patenterteilung: **25.05.2022**
(21) Anmeldenummer: 16203284.1
(22) Anmeldetag: 09.12.2016
(51) Int. Cl.: H02G 3/12

(54) **INSTALLATIONSDOSE FÜR ELEKTRISCHE ODER ELEKTRONISCHE GERÄTE**
INSTALLATION BOX FOR ELECTRICAL OR ELECTRONIC DEVICES
BOITIER D'INSTALLATION POUR APPAREILS ÉLECTRIQUES OU ÉLECTRONIQUES

(30) Priorität: 10.12.2015 DE 202015106740 U
(43) Veröffentlichungstag der Anmeldung: 14.06.2017
(73) Patentinhaber: Agro AG, 5502 Hunzenschwil (CH)
(72) Erfinder:
(74) Vertreter: Rentsch Partner AG

(56) Entgegenhaltungen:
- EP-A1- 0 818 864
- EP-A1- 2 924 338
- EP-A2- 2 886 935
- WO-A1-2007/014981
- WO-A1-2015/118241
- DE-A1- 19 815 950
- DE-U1-202010 015 515
- FR-A1- 3 003 628

## Beschreibung

### TECHNISCHES GEBIET

Die Erfindung betrifft eine Installationsdose für elektrische oder elektronische Geräte. Insbesondere betrifft die Erfindung eine Installationsdose zur Anwendung in Hohlwand-Konstruktionen.

### STAND DER TECHNIK

Bestimmte Arten von Installationsdosen dienen unter anderem zum luftdichten Einbau elektrischer oder elektronischer Geräte - insbesondere von Leuchtmitteln - in Wände und Decken unterschiedlicher Konstruktionsweisen, insbesondere solcher mit Hohlbauweise. Solche auch Hohlwanddosen genannte Installationsdosen sollen dabei einerseits das umgebende Material der Decken-, bzw. Wandkonstruktion (wie z.B. Dämmmaterialien, Dampfsperrfolien, etc.) vor hohen Betriebstemperaturen der elektrischen Geräte schützen. Andererseits sollen sie die elektrischen Geräte vor Verschmutzung und Beschädigung schützen. Ebenso können mit solchen Hohlwanddosen luftdichte Hohlräume zur Aufnahme von Geräten geschaffen werden, so dass beispielsweise vorhandene Dampfsperren nicht durch- bzw. unterbrochen werden. Ausserdem eignen sich Hohlwanddosen teilweise auch für den nachträglichen Einbau in gedämmten Hohldecken und - wänden.

Aus dem Stand der Technik ist eine Vielzahl von Installationsdosen für Hohlwand-Konstruktionen bekannt, in ihrer Form vor oder während der Installation verändert werden können.

Die EP 2924338 A1 zeigt eine Anordnung welche, sofern an einer Vorrichtung fixiert ermöglicht, dass die Vorrichtung in einer Öffnung mit einem einzigen Handgriff/Bewegung/Ablauf eingesetzt und befestigt werden kann, wobei die Öffnung in einem Untergrund aus unterschiedlichem Material und unterschiedlicher Materialstärke angeordnet sein kann. Die Anordnung umfasst eine einzige Struktur aus einem einzigen Material, welche eine automatische Einpassung und Befestigung im Untergrund möglich macht, wobei auf dieses Weise die Vorrichtung fest und auf unbestimmte Zeit gehalten werden kann. Die Anordnung kann aus verschiedenen Teilen, wobei jeder Teil aus einem unterschiedlichen Material gefertigt sein kann, aufgebaut sein.

Die DE 19815950 A1 offenbarten Hohlwanddosen werden in mehrfacher Anzahl in Durchbrüche einer Wand durch eine Steckmontage eingebracht und in ihrer Montagelage gesichert. Zur Leitungsführung zwischen benachbarten Dosen verwendet man dabei sogenannte Kombibrücken, die den Abstand zwischen benachbarten Dosen überbrücken. Um die Herstellung und Montage der Dosen zu vereinfachen, wird vorgeschlagen, wenigstens ein Teilstück der Kombibrücke mit der Dose einstückig auszubilden, welches dann einen den Umfang der Dose überragenden Dosenvorsprung bildet. Dieser Dosenvorsprung wird aber elastisch mit der Dose verbunden, weshalb bei der Einsteckmontage der Dose sich der Dosenvorsprung gegen den Dosenumfang drücken lässt.

Die FR 3003628 A1 beschreibt eine Einbauvorrichtung für eine Beleuchtung in einer Öffnung einer Zwischendecke mit einem zylindrischen Körper, welcher einen geschlossen Boden aufweist und teilweise von einem Flansch umlaufen wird sowie Einrastzungen aufweist. Die Einbauvorrichtung umfasst ferner eine zylindrische Hülse, wobei der Querschnitt an die Öffnung in der Zwischendecke angepasst ist und eine elastisch deformierbare Kante aufweist, deren Querschnitt grösser ist als die Öffnung. Auf diese Weise wird ein Haltestutzen gebildet. Eine Trennwand verschliesst die Hülse. Ebenso wird dadurch eine Kavität ausgebildet, die den zylindrischen Körper aufnimmt, aber die Einrastzungen die am zylindrischen Körper angeordnet sind, nicht miteinschliesst.

Die EP 0818864 A1 offenbart ein in einer Öffnung in einer Wand anzubringendes Element, welches mindestens eine Seitenwand aufweist. Das Element ist an einer Randseite der Seitenwand durch einen seitlich nach aussen vorstehenden Kragen begrenzt. Die Seitenwand des Elements ist mit seitlich nach aussen vorstehenden Nocken versehen, die federnd mit dem Element verbunden sind. Die Nocken sind gelenkig um eine Scharnierachse mit der Seitenwand des Elements verbunden. Die Scharnierachse steht im spitzen oder rechten Winkel zur Randseite des Elements. Die Seitenwand des Elements weist in der Nähe des Kragens eine Schwachstelle auf, sodass der Kragen in der Fläche der Seitenwand federnd bewegt werden kann. Die Seitenwand des Elements, das üblicherweise aus einem flexiblen und elastischen Kunststoff besteht, kann dadurch in der Nähe des Kragenteils vorübergehend oder permanent gedehnt werden.

Die DE 20210015515 beschreibt eine Anordnung zur Befestigung einer Installationsdose für Elektroinstallationen in einer Wand, einer Hohlwand oder einer wärmegedämmten Wandung oder Fassade von Gebäuden, wobei die Wand oder die Fassade eine Ausnehmung, einen Durchbruch oder eine sacklochartige Ausnehmung zur Aufnahme oder zum Einsetzen der Installationsdose aufweist. Die Installationsdose umfasst mechanische Befestigungsmittel die in einer Vormontagelage in eine Position eingestellt sind, in der sie in der Umfangsfluchtlinie der Installationsdose liegen oder hinter der Umfangsfluchtlinie zurückliegen, und die in einer Montagesolllage in eine Position eingestellt sind, in der sie über die Umfangsfluchtlinie der Installationsdose vorragen.

Die WO 2007/014981 A1 betrifft eine Montage- oder Anschlussdose. Diese umfasst einen Befestigungskragen, der von einem Kastengehäuse getrennt ist, sodass die Dose von der Raumseite her manuell in ein Installationsloch einer Bauplatte eingebaut werden kann. Dementsprechend weist der Befestigungskragen flexible Verriegelungslaschen auf, die durch das Installationsloch hindurchgedrückt werden können und mit einer hinteren Oberfläche der Bauplatte in Eingriff gebracht werden können. Das Kastengehäuse umfasst Kabeldurchführungen, die mit Kabelklemmen versehen sind und in Aussparungen des Kastengehäuses angeordnet sind. Von außen nach innen gerichtet, ermöglichen die Aussparungen das Einschieben eines verkabelten Kastengehäuses in den in einem Installationsloch vorhandenen Befestigungskragen. Der Befestigungskragen und das Kastengehäuse sind mit Eingriffselementen versehen, die in der Lage sind, das Kastengehäuse an dem Befestigungskragen zu befestigen, sobald sich das Kastengehäuse in seiner eingedrückten Position befindet.

WO 2015/118241 A1 offenbart eine zweitteilig aufgebaute Installationsdose, die einerseits eine Einbaubox umfasst, die eine Seitenwand aufweist, in der sich mindestens eine Öffnung erstreckt und andererseits aus einem Ausrüstungsmodul, das in die Einbau-Box einsetzbar ist und einen elektrischen Mechanismus, einen Sockel , mindestens eine Klappe aufweist, besteht. Die Klappen sich relativ zum Sockel zwischen einer zurückgezogenen Position in welcher sie das Einpassen des Sockels in die Einbau-Box ermöglichen und einer ausgeschwenkten Position, in welcher sie in die mindestens eine Öffnung einhaken, bewegbar. Die Öffnung ist zumindest teilweise durch eine elastisch verformbare Folie abgedeckt.

EP2886935 betrifft ein Einbaugehäuse für elektronische Einbauten und Leuchten zum Einbau in Leichtbauhohldecken oder -wände, wobei diese eine dem Querschnitt des Einbaugehäuses angepasste Einbauöffnung aufweisen, in die das Einbaugehäuse einsetzbar ist, wobei das Einbaugehäuse einen Boden und eine vom Boden abragende umlaufende Wandung (3) aufweist, wobei mindestens die umlaufende Wandung aus elastischem Kunststoff besteht und die Wandung im Wesentlichen parallel zu einer Mittellängsachse des Einbaugehäuses ausgerichtete Stege aus formstabilem Kunststoff aufweist, die in Umfangsrichtung der Wandung voneinander beabstandet sind.

Die DE 202013103005 U1 wurde am 08.07.2013 im Namen der F-Tronic Winfried Fohs Gesellschaft mit beschränkter Haftung eingereicht und zeigt eine Installationsdose für Hohlwandinstallationen. Die beschriebene Installationsdose ist zur Aufnahme von elektrotechnischen oder elektronischen Bauelementen vorgesehen und besteht aus einem Dosenkörper, der gemäss der Druckschrift mindestens aus einer Bodenfläche, einer Mantelfläche und einer Aufnahmeöffnung gebildet ist. Am Dosenkörper ist seitlich ein Aufnahmeraum angeschlossen, der mit Abstand zur Aufnahmeöffnung an der Mantelfläche angeordnet ist. Der Dosenkörper besteht in einem Teilbereich seiner Oberfläche aus weichelastischem Material, wodurch für das Einbringen der Installationsdose in eine Ausnehmung in einer Wand dieser Teilbereich in die Installationsdose eingedrückt werden kann. Dadurch soll das Einbringen in die Ausnehmung vereinfacht werden.

Die EP 2886935 A2 wurde am 30.10.2014 im Namen der Kaiser GmbH & Co. KG eingereicht und zeigt ein Einbaugehäuse für elektronische Einbauten und Leuchten. Das Einbaugehäuse ist in seinem Querschnitt auf eine Einbauöffnung in einer Leichtbauhohldecke angepasst, um in diese eingesetzt werden zu können. Weiter weist das Einbaugehäuse einen Boden und eine vom Boden abragende umlaufende Wandung auf, wobei mindestens die umlaufende Wandung aus elastischem Kunststoff besteht. Zudem weist die Wandung im Wesentlichen parallel zu einer Mittellängsachse des Einbaugehäuses ausgerichtete Stege auf, die in Umfangsrichtung der Wandung voneinander beabstandet sind. Dadurch wird es möglich, dass das Einbaugehäuse vor dem Einfahren in die Einbauöffnung in Querrichtung (z.B. radial) zusammengedrückt und - sobald es in der Sollposition ist - wieder aufgespreizt werden kann, so dass ein fester kraftschlüssiger Sitz in der Einbauöffnung erreicht werden kann. Durch die Querstege wird vermieden, dass sich das Einbaugehäuse in Richtung der Querstege verformen kann.

Die DE 202015101801 U1 wurde am 13.04.2015 im Namen der Kaiser GmbH & Co. KG eingereicht und zeigt eine Installationsdose für elektrische Geräte. Der Druckschrift liegt insbesondere die Aufgabe zugrunde eine Installationsdose zur Verfügung zu stellen, die ein relativ grosses Innenvolumen zur Aufnahme von bspw. elektrischen oder elektronischen Geräten aufweist und dennoch durch relativ kleine Ausnehmungen in Hohlwänden eingeführt werden kann. Die Installationsdose umfasst dazu einen Dosenhauptkörper, der einen ersten Installationsraum umgibt und einen von diesem seitlich abstehenden Dosennebenkörper, welcher einen zweiten Installationsraum umgibt. Der Dosennebenkörper soll dabei deformierbar ausgestaltet sein, so dass er ins Innere des ersten Installationsraumes des Dosenhauptkörpers umstülpbar ist. Durch das Umstülpen des Dosennebenkörpers in das Innere der Installationsdose kann der durch eine Ausnehmung in der Beplankung der Hohlwand einzuführende Querschnitt der Installationsdose reduziert werden und diese folglich einfach in die Hohlwand eingefahren werden. Anschliessend kann der umgestülpte Dosennebenkörper wieder rückgestülpt werden. Der Dosennebenkörper soll dazu wenigstens bereichsweise aus weichelastischem Kunststoff hergestellt sein, kann aber auch Bereiche aus starrem Kunststoff aufweisen, die etwa in der Form von Rippen ausgeformt sind. Die Installationsdose kann auch mehr als einen Dosennebenkörper aufweisen.

### DARSTELLUNG DER ERFINDUNG

Erfindungsgemässe Installationsdosen sind nicht auf Decken in Hohlwand-Bauweise beschränkt, sondern können grundsätzlich auch in Wänden oder Böden zur Anwendung kommen, welche zudem nicht zwingend Hohlwand-Konstruktionen sein müssen.

Der Einbau von Installationsdosen gerade für elektrotechnische oder elektronische Geräte in Hohlwand-Konstruktionen gestaltet sich häufig als schwierig. Einerseits sollen die in die Beplankung einer Hohlwand-Konstruktion eingebrachten Ausnehmungen meist nicht grösser als unbedingt notwendig sein, um das Erscheinungsbild der betreffenden Decke nicht negativ zu beeinträchtigen und um die mit dem Einbringen einer solchen Ausnehmung einhergehenden mechanischen Schwächung der Decke zu minimieren. Andererseits sollen die in einer solchen Installationsdose eingebrachten Geräte sicher gehalten, bzw. verankert sein, und müssen - insbesondere bei Lampen - zudem gleichzeitig auch ausreichend gekühlt werden, um einer thermischen Schädigung der eingebrachten Geräte und der Installationsdose selber vorbeugen zu können. Eine effektive Wärmableitung ist daher wichtig.

Eine Aufgabe der Erfindung besteht darin wenigstens eines der oben genannten Probleme zu lösen.

Eine Installationsdose für elektrische oder elektronische Geräte gemäss der vorliegenden Erfindung umfasst normalerweise ein Dosengehäuse mit einer Dosenwand und einem daran anschliessenden Dosenboden. Die Dosenwand und der Dosenboden umgeben dabei einen ersten Installationsraum, welcher zur wenigstens teilweisen Aufnahme eines elektrischen oder elektronischen Geräts über eine Einbauöffnung geeignet ist.

An der Dosenwand sind eine erste Ausbuchtung und eine dieser gegenüberliegende zweite Ausbuchtung angeordnet, die jeweils zwischen einer ersten inneren Stellung und einer zweiten äusseren Stellung, in der die erste und/oder die zweite Ausbuchtung mit Bezug auf die erste innere Stellung seitlich nach aussen steht, bewegbar. Es ist auch möglich, dass die Dosenwand kontinuierlich in den Boden übergeht. Die Installationsdose eignet sich insbesondere zur Aufnahme mindestens eines elektrischen oder elektronischen Gerätes, wie z.B. Leuchten (insbesondere von LED-Strahlern), Transformatoren, Schalter, Sensoren, Steuerungen oder ähnlichem. In der ersten inneren Stellung kann die erste und/oder die zweite Ausbuchtung insbesondere gar nicht oder in nur geringem Ausmass seitlich nach aussen von der Dosenwand abstehen.

**Erfindungsgemäß ist die Installationsdose** so ausgestaltet, dass die erste und die zweite Ausbuchtung bezüglich dem ersten Installationsraum diametral zueinander angeordnet sind.

**Erfindungsgemäß ist die Installationsdose** so ausgestaltet, dass die erste und/oder die zweite Ausbuchtung einen Verformungsbereich aufweisen, der so eingerichtet ist, dass er sich unter radialer Kraftanwendung nach aussen verformen kann. Dadurch können die Ausbuchtungen zwischen der ersten und der zweiten Stellung bewegt werden, ohne dass restliche Teile des Dosengehäuses übermässig deformiert werden.

Gute Ergebnisse können erzielt werden, wenn der Verformungsbereich wenigstens teilweise aus einem weichelastischen Kunststoff gefertigt ist. Installationsdosen mit solchen Verformungsbereichen können besonders kostengünstig mittels Spritzgussverfahren hergestellt werden. Der Verformungsbereich kann auch wenigstens teilweise aus einem starren Kunststoff gefertigt sein.

**Erfindungsgemäß** weist der Verformungsbereich einen Faltenbalg auf. Die Verwendung solcher Faltenbalge erlaubt es zudem die äussere Oberfläche der Installationsdose zu vergrössern, was insbesondere eine verbesserte Ableitung von Wärme mittels Konvention ermöglicht. Dadurch kann die Lebensdauer eines aufgenommenen elektrischen Geräts erhöht und/oder die Systemsicherheit der Installationsdose verbessert werden. Ebenso verhindern die Falten gleichzeitig, dass z.B. eine Dampfsperre und/oder ein Dämmmaterial (falls vorhanden) flach auf der Installationsdose aufliegen kann, wodurch die Konvention behindert würde. Indem die Faltenbalge im Querschnittinnern angeordnet sind und von dort nach aussen deformiert werden können, kann das Spritzgiesswerkzeug erheblich vereinfacht werden, da eine Zwangsentformung und/oder Schieber weitestgehend vermieden werden können.

Bei Bedarf kann die erste und/oder die zweite Ausbuchtung ein Gelenk aufweisen, das eine Abwinkelung der ersten und/oder zweiten Ausbuchtung zu einer Hauptachse des Dosengehäuses bewirkt, wenn die erste und/oder zweite Ausbuchtung von der ersten in die zweite Stellung gebracht wird. Eine solche Ausgestaltung einer Installationsdose kann einerseits gut an bekannte Befestigungsvorrichtungen von Geräten angepasst werden und kann gleichzeitig selbst nach längerem Einsatz ohne grosse Schwierigkeiten entfernt bzw. ersetzt werden, wie nachfolgend noch genauer erläutert wird. Das Gelenk kann ein z.B. durch Materialwahl und/oder Materialdicke ausgebildeter Bereich der Dosenwand sein (Filmscharnier).

Alternativ oder in Ergänzung können die erste und/oder zweite Ausbuchtung derart deformierbar ausgestaltet sein, dass sie von der ersten Stellung, bei welcher die erste und/oder zweite Ausbuchtung wenigstens teilweise im Inneren des ersten Installationsraums liegen in die zweite Stellung, bei welcher die erste und/oder zweite Ausbuchtung seitlich von der Dosenwand abstehen, umstülpbar sind.

Gemäss einer Ausgestaltung der Erfindung können die erste und/oder die zweite Ausbuchtung je in einer Einbuchtung der Dosenwand wenigstens teilweise versenkt angeordnet sein. Dadurch kann das Montieren der Installationsdose in einer Hohlwand-Konstruktion vereinfacht werden. Dies ist insbesondere dann der Fall, wenn die erste und die zweite Ausbuchtung in der ersten Stellung zu einem wesentlichen Teil in der Ausbuchtung liegen und dabei den restlichen Teil der Dosenwand nicht wesentlich überragen. Eine bei der Herstellung mittels einem Spritzgussverfahren besonders einfach zu entformende Installationsdose kann erreicht werden, wenn die Einbuchtungen sich jeweils bis zum Dosenboden erstrecken, wie nachfolgend noch genauer erklärt wird.

Bei Bedarf kann die Installationsdose im Innenraum hinterschnittfrei ausgestaltet sein. Dadurch wird sie in axialer Richtung entformbar, ohne dass in einem Spritzgusswerkzeug innere Schieber verwendet werden müssen.

Um eine besonders zuverlässige Verankerung eines Geräts in der Installationsdose zu ermöglichen, können die erste und/oder die zweite Ausbuchtung einen Aufnahmebereich zur Aufnahme einer Befestigungsvorrichtung eines aufzunehmenden elektrischen oder elektronischen Geräts aufweisen. Eine Befestigungsvorrichtung kann z.B. eine Klemmvorrichtung, insbesondere ein Klemmbügel/Federbügel sein. Insbesondere kann der Aufnahmeraum als Faltentasche in einem Faltenbalg (falls vorhanden) ausgebildet sein.

Gemäss einer Variante können die erste und/oder zweite Ausbuchtung wenigstens bereichsweise aus weichelastischem Kunststoff hergestellt sein. Um die Formstabilität der Ausbuchtungen zu erhöhen, können die erste und/oder zweite Ausbuchtung wenigstens einen Bereich aus starrem Kunststoff aufweisen.

Um die Formstabilität der gesamten Installationsdose zu verbessern und gleichzeitig auch deren Handhabung bei der Installation zu verbessern kann das Dosengehäuse aus flexiblem Kunststoff bestehen und ein Gerüst aus einem vergleichsweise starren Kunststoff aufweisen, welches die Tragfähigkeit in axialer Richtung erhöht. Insbesondere kann das Gerüst ein flächiges Gerüstelement, insbesondere eine Gerüstplatte oder Gerüstschale, aufweisen, das sich entlang der Dosenwand in Umfangsrichtung des Dosengehäuses über zwischen 60° und 180°, insbesondere zwischen 80° und 100°, des Gesamtumfangs der Dosenwand erstreckt. Dadurch können bei Bedarf die Steifigkeit und Formfestigkeit der Installationsdose weiter erhöht werden. Diese Elemente können zudem die Wärmeabfuhr verbessern.

Gemäss einer Ausgestaltung der Erfindung kann der Dosenboden wenigstens bereichsweise aus einem starren Kunststoff gefertigt sein. Der Dosenboden kann wenigstens bereichsweise gekrümmt und/oder gewellt und/oder gerippt sein. Dadurch kann eine höhere Stabilität des Dosengehäuses erzielt werden, was gerade bei schlanken/tiefen Dosengehäusen vorteilhaft sein kann.

Um Anschlüsse an die Installationsdose erstellen zu können kann das Dosengehäuse wenigstens eine Öffnung aufweisen, die z.B. durch eine heraustrennbare Membran aus weichelastischen Kunststoff verschlossen sein kann. Alternativ oder in Ergänzung kann die Dosenwand eine mit einem Stöpsel verschliessbare Kabelanschlussöffnung aufweisen. Eine verbesserte Herstellbarkeit und auch Handhabung kann erzielt werden, wenn die Installationsdose einen Stöpsel aufweist, der z.B. über einen Steg mit dem Dosengehäuse wirkverbunden ist, wobei der Stöpsel und der Steg einstückig aus einem weichelastischen Kunststoff im selben Arbeitsgang gefertigt werden wie die Dose. Um elektrische Leiter einfacher in eine Kabelanschlussöffnung einführen und diese anschliessend gut abschliessen zu können, kann der Stöpsel zweiteilig aus einer ersten und einer zweiten Stöpselhälfte ausgebildet sein. Die erste und zweite Stöpselhälfte können z.B. durch eine Solltrennstelle trennbar miteinander verbunden sein.

Gemäss einer Ausgestaltung einer erfindungsgemässen Installationsdose können die erste und/oder die zweite Ausbuchtung in der zweiten Stellung eine Seitenwand aufweisen, die von der Einbauöffnung her gesehen in einem Winkel von 10° bis 60°, bevorzugt von 10° bis 30° zu einer Hauptachse des Dosengehäuses angeordnet ist. Dadurch kann verhindert werden, dass die Ausbuchtungen nach längerer Installationsdauer infolge plastischer Deformation derart seitlich von der Dosenwand abstehen, dass das Entfernen der Installationsdose aus einer Hohlwand-Konstruktion übermässig behindert wird.

Um den zur Verfügung stehenden Installationsraum zu vergrössern und um bei Bedarf ein Ausschwenken eines eingebrachten Geräts (etwa eines LED-Strahlers) zu ermöglichen, kann das Dosengehäuse einen seitlich abstehenden Dosennebenkörper aufweisen, welcher einen zweiten Installationsraum umgibt, wobei der Dosennebenkörper deformierbar ausgestaltet ist, derart, dass er ins Innere des ersten Installationsraumes des Dosengehäuses umstülpbar ist. Ein solcher Dosennebenkörper kann auch als dritte Ausbuchtung betrachtet werden. Um das Ausschwenken einer Leuchte zu verbessern, kann der Dosennebenkörper an der Dosenwand mittig zwischen der ersten und der zweiten Ausbuchtung angeordnet sein. Eine gute Funktionalität kann erreicht werden, wenn der Dosennebenkörper wenigstens bereichsweise aus weichelastischem Kunststoff hergestellt ist.

### KURZE ERLÄUTERUNGEN ZU DEN FIGUREN

Anhand der in den nachfolgenden Figuren gezeigten Ausführungsbeispiele und der dazugehörigen Beschreibung werden Aspekte der Erfindung näher erläutert. Es zeigen jeweils schematisch
- Fig. 1: eine erste Ausführungsform einer Installationsdose in einer ersten perspektivischen Ansicht;
- Fig. 2: die Ausführungsform einer Installationsdose aus Fig. 1 in einer zweiten perspektivischen Ansicht;
- Fig. 3: die Ausführungsform einer Installationsdose aus Fig. 1 und Fig. 2 in einer dritten perspektivischen Ansicht zusammen mit einem aufzunehmenden Gerät;
- Fig. 4: die Installationsdose aus Fig. 3 mit dem aufgenommenen Gerät vor der Befestigung des Geräts in einer perspektivischen Ansicht;
- Fig. 5: die Installationsdose aus Fig. 4 mit aufgenommenem Gerät nach der Befestigung des Geräts in einer perspektivischen Ansicht von oben;
- Fig. 6: eine Seitenansicht der Installationsdose gemäss Fig. 1 ;
- Fig. 7: Schnitt AA aus Fig. 6;
- Fig. 8: ein dem Schnitt AA entsprechender Schnitt durch eine Installationsdose mit ersten und zweiten Ausbuchtungen in zweiter Stellung;
- Fig. 9: eine zweite aber nicht beanspruchte Ausführungsform einer Installationsdose in einer perspektivischen Ansicht;
- Fig. 10: die Installationsdose aus Fig. 9 in einer Draufsicht;
- Fig. 11: Schnitt BB aus Fig. 10;
- Fig. 12: eine dritte Ausführungsform einer Installationsdose in einer ersten perspektivischen Ansicht;
- Fig. 13: die Installationsdose aus Fig. 12 in einer zweiten perspektivischen Ansicht;
- Fig. 14: die Installationsdose aus Fig. 12 und Fig. 13 in einer Draufsicht;
- Fig. 15: die Installationsdose aus Fig. 12, Fig. 13 und Fig. 14 in einer perspektivischen und geschnittenen Ansicht;
- Fig. 16: die Installationsdose aus Fig. 12 bis 14 mit einer Ausbuchtung in erster Stellung in einer perspektivischen Ansicht;
- Fig. 17: die Installationsdose aus Fig. 16 mit der Ausbuchtung in zweiter Stellung;
- Fig. 18: die Installationsdose aus Fig. 17 mit einer ersten Ausbuchtung in erster Stellung und einer zweiten Ausbuchtung in zweiter Stellung in einer Seitenansicht.

### WEGE ZUR AUSFÜHRUNG DER ERFINDUNG

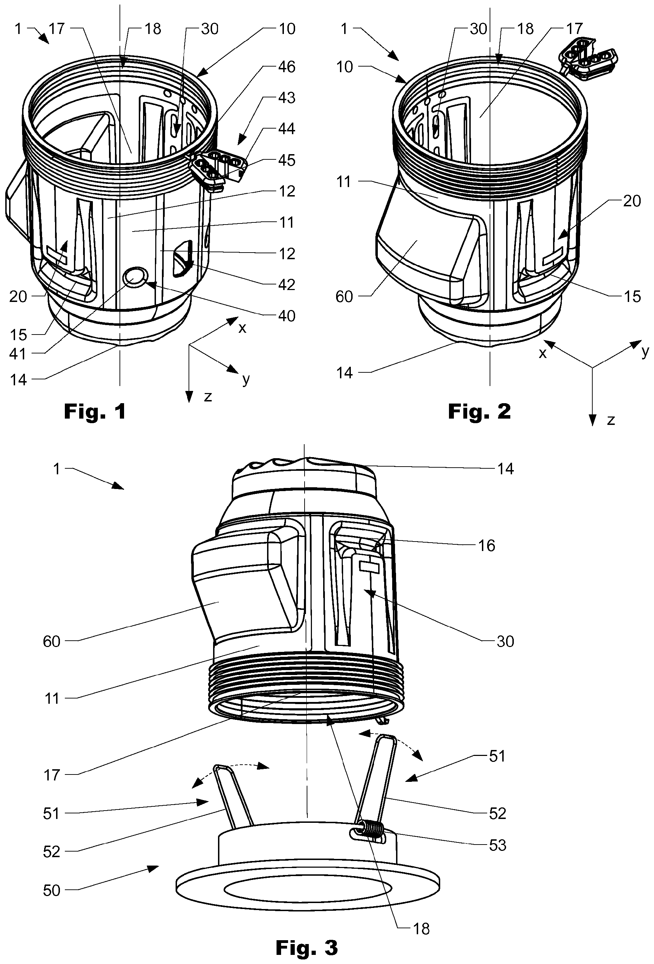

Die **Fig. 1** bis **8** zeigen eine mögliche erste erfindungsgemässe Ausführungsform einer Installationsdose 1. Wie in **Fig. 1** und **2** gezeigt, weist die Installationsdose 1 ein Dosengehäuse 10 auf, das eine Dosenwand 11 und einen daran anschliessenden Dosenboden 14 aufweist. Das Dosengehäuse 10 der gezeigten Ausführungsform besteht aus einem flexiblen Kunststoff und weist ein Gerüst 12 aus starrem Kunststoff auf, das insbesondere wie gezeigt Längsrippen aufweist, welche das Dosengehäuse auf eine bestimmte Weise versteifen. Die Dosenwand 11 und der Dosenboden 14 umgeben einen ersten Installationsraum 17, der über eine Einbauöffnung 18 zugänglich ist und in welchem ein elektrisches oder elektronisches Gerät 50 aufgenommen werden kann, wie in **Fig. 3** bis **5** illustriert wird.

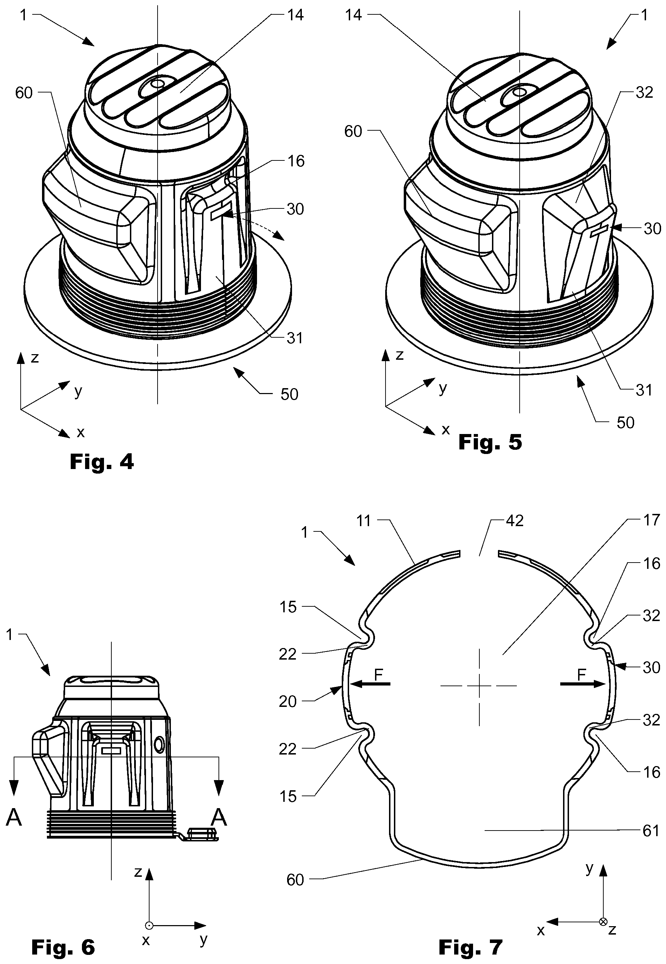

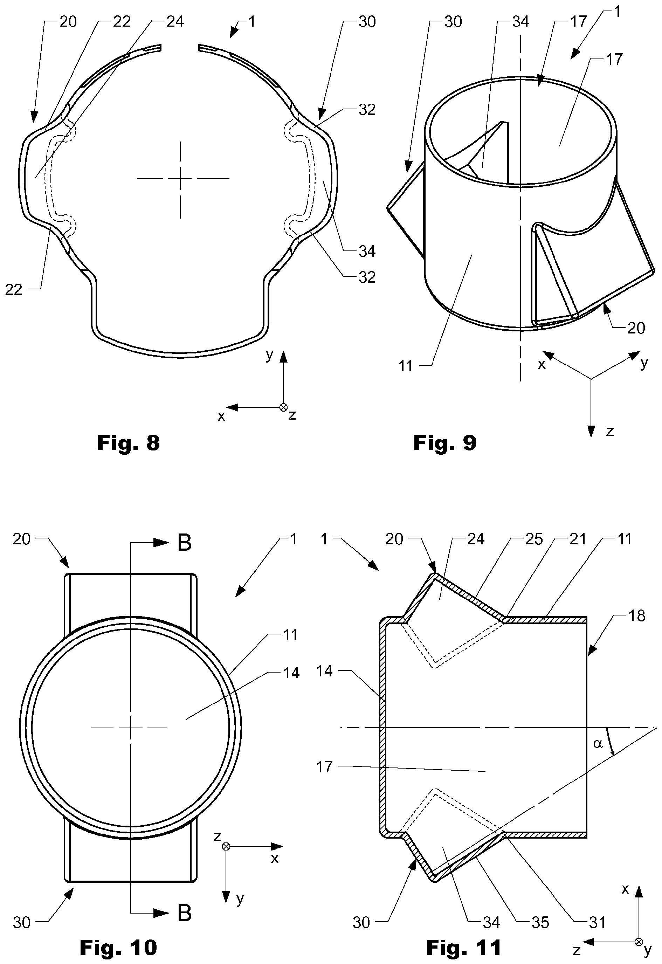

An der Dosenwand 11 sind eine erste Ausbuchtung 20 und eine zweite Ausbuchtung 30 angeordnet. Diese Ausbuchtungen 20, 30 sind in den **Fig. 1** bis **4** jeweils in einer ersten Stellung gezeigt, in welcher sie seitlich nicht gegenüber der restlichen Dosenwand 11 abstehen. In dieser ersten Stellung sind beide Ausbuchtungen 20, 30 jeweils in Einbuchtungen 15, 16 angeordnet, wie auch z.B. in **Fig. 7** gut ersichtlich ist. Die erste und die zweite Ausbuchtung 20, 30 sind bezüglich dem ersten Installationsraum 17 jeweils diametral zueinander angeordnet, wie in **Fig. 7** und **8** gezeigt wird. In der Dosenwand 11 ist eine Kabelanschlussöffnung 42 angeordnet, die bei Bedarf mit einem Stöpsel 43 verschlossen werden kann. In der gezeigten Ausführungsform wird dieser Stöpsel 43 einstückig mit einem Teil der restlichen Installationsdose 1 aus einem weichelastischen Kunststoff hergestellt. Der gezeigte Stöpsel 43 umfasst eine erste und eine zweite Stöpselhälfte 44, 45, die über einen ebenfalls aus dem weichelastischen Kunststoff gefertigten Steg 46 mit dem Dosengehäuse 10 verbunden sind. Zwischen die beiden Stöpselhälften 44, 45 kann etwa ein elektrischer Leiter (nicht gezeigt) eingeklemmt werden, bevor der Stöpsel 43 in die Kabelanschlussöffnung 42 eingesetzt wird, um diese quasi-hermetisch zu verschliessen. Ebenfalls weist die Dosenwand 11 mit einer Membran 41 verschlossene Öffnungen 40 auf, die bei Bedarf durchbrochen und zum Anschluss von z.B. zusätzlichen elektrischen Leitern verwendet werden können.

Das gezeigte Gerät 50 weist eine als Klemmvorrichtung ausgestaltete Befestigungsvorrichtung 51 Auf. Diese umfasst in der gezeigten Ausführungsform zwei aus einem Federdraht geformte Bügel 52 die jeweils über eine Schraubenfeder 53 mit dem Gerät 50 verbunden sind, so dass sie im Wesentlichen in radialer Richtung federnd sind (angedeutet mit den unterbrochenen Doppelpfeilen). Wird eine solche Befestigungsvorrichtung 51 in den ersten Installationsraum 17 der Installationsdose 1 wenigstens teilweise eingeführt und so ausgerichtet, dass die beiden Bügel52 im Doseninnern auf der ersten, bzw. zweiten Ausbuchtung 20, 30 zu liegen kommen, so üben diese, wie in **Fig. 7** schematisch gezeigt, eine Kraft F vom Innern des Dosengehäuses her auf die erste bzw. zweite Ausbuchtung 20, 30 aus. Dadurch werden diese jeweils in eine zweite Stellung bewegt, in der sie in grösserem Ausmass seitlich von der Dosenwand 11 abstehen, wie in **Fig. 5** und **8** gezeigt ist. Die Bügel 52 der Klemmvorrichtung 51 kommen dabei in speziellen Aufnahmebereichen 24, 34 der ersten, bzw. zweiten Ausbuchtung 20, 30 zu liegen. Die resultierende Verbindung zwischen der Klemmvorrichtung 51 und den beiden Ausbuchtungen 20, 30 wird dadurch sowohl reib-, als auch formschlüssig, was eine besonders gute Verankerung des Geräts 50 in der Installationsdose 1 bewirkt.

Wie in **Fig. 7** und **8** gut ersichtlich ist, werden die erste und die zweite Ausbuchtung 20, 30 jeweils teilweise von speziellen Verformungsbereichen 22, 32 umrandet. Diese Verformungsbereiche 22, 32 bestehen jeweils aus einem weichelastischen Kunststoff und unterstützen die Bewegung der Ausbuchtungen 20, 30 zwischen der ersten (in **Fig. 8** mit unterbrochenen Linien dargestellt) und der zweiten Stellung (in **Fig. 8** mit durchgehenden Linien dargestellt), wodurch eine Auslenkung der beiden Ausbuchtungen 20, 30 in die zweite Stellung selbst bei geringen aufgebrachten Kräften F ermöglicht wird. Ebenso weisen die erste und die zweite Ausbuchtung 20, 30 jeweils einen als eine Art von Gelenk 21, 31 auf, das den Übergang von der ersten in die zweite Stellung unterstützt.

Weiterhin weist die in den **Fig. 1** bis **8** gezeigte Ausführungsform einer erfindungsgemässen Installationsdose 1 einen Dosennebenkörper 60 auf, der an der Dosenwand 11 mittig zwischen der ersten und der zweiten Ausbuchtung 20, 30 angeordnet ist und aus einem weichelastischen Kunststoff hergestellt ist. Dieser Dosennebenkörper 60 ist deformierbar ausgestaltet, so dass er ins Innere des ersten Installationsraumes 17 des Dosengehäuses 10 umstülpbar ist, oder wie in den **Fig. 1** bis **8** seitlich vom Dosengehäuse 11 abstehen kann. In diesem vom Dosengehäuse 11 abstehenden Zustand umgibt der Dosennebenkörper 60 einen zweiten Installationsraum 61, in welchem ebenfalls bei Bedarf ein Gerät (nicht gezeigt) untergebracht, bzw. eingeschwenkt werden kann. Beispielsweise der Kühlköper einer LED-Leuchte beim Abkippen derselben.

Die **Fig. 9** bis **11** zeigen schematisch eine weitere Ausführungsform einer Installationsdose 1 (diese fällt nicht unter den Wortlaut des unabhängigen Anspruchs), bei welcher die erste und die zweite Ausbuchtung 20, 30 derart deformierbar ausgestaltet sind, dass sie von der ersten Stellung, bei welcher die erste und/oder zweite Ausbuchtung (20, 30) im Inneren des ersten Installationsraums (17) liegt (in **Fig. 11** durch die unterbrochenen Linien schematisch dargestellt) in die zweite Stellung, bei welcher die erste und zweite Ausbuchtung 20, 30 seitlich von der Dosenwand 11 abstehen (in **Fig. 11** durch die durchgezogenen Linien schematisch dargestellt), umstülpbar sind. Dazu sind die erste und die zweite Ausbuchtung 20, 30 jeweils wenigstens bereichsweise aus einem weichelastischen Kunststoff hergestellt.

Wie in **Fig. 11** schematisch dargestellt ist, weisen sind die erste und die zweite Ausbuchtung 20, 30 in der zweiten Stellung jeweils eine Seitenwand 25, 35 auf, die in einem Winkel α von hier etwa 30° zu einer Hauptachse des Dosengehäuses 10 angeordnet sind. Dadurch wird unter anderem die Entfernung einer solchen Installationsdose 1 aus einer Beplankung einer Hohlwand-Konstruktion (nicht dargestellt) vereinfacht.

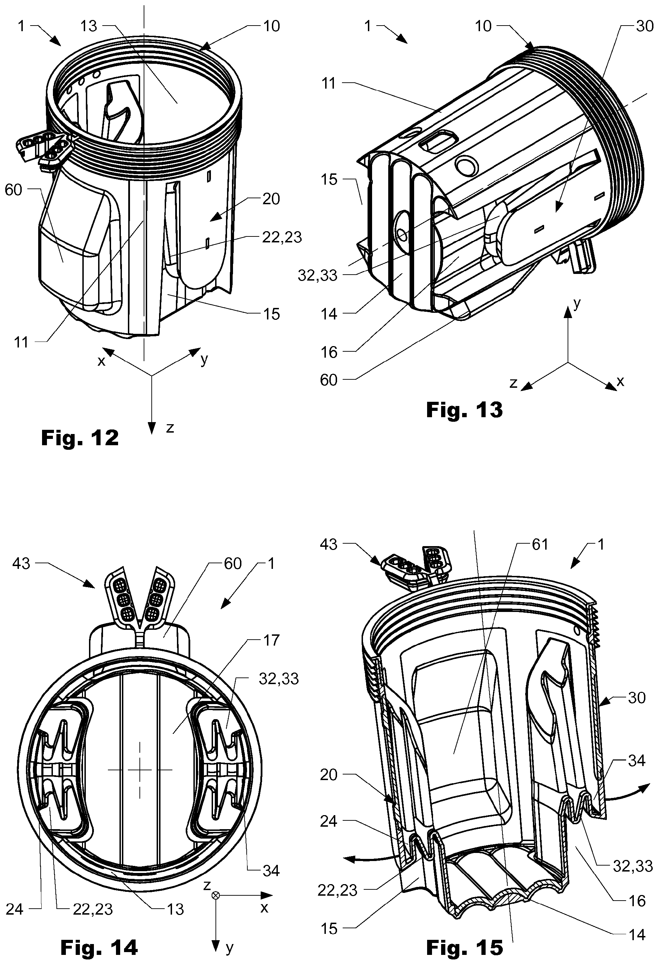

Die **Fig. 12** bis **18** zeigen eine dritte erfindungsgemässe Ausführungsform einer Installationsdose 1, bei der die erste und die zweite Ausbuchtung 20, 30 jeweils einen als Faltenbalg 23, 33 ausgebildeten Verformungsbereich 22, 32 aufweisen.

Die erste und die zweite Ausbuchtung 20, 30 sind jeweils in einer Einbuchtung 15, 16 der Dosenwand 11 angeordnet, wobei sich die Einbuchtungen 15, 16 jeweils bis zum Dosenboden 14 erstrecken. Eine solche Ausführungsform einer erfindungsgemässen Installationsdose 1 kann besonders günstig mittels einem Spritgussverfahren, insbesondere mittels einem 2-Komponenten-Spritgussverfahren, hergestellt werden. Da die Ausbuchtungen 20, 30 keine Hinterschneidungen enthalten, müssen für sie keine Seitenschieber verwendet werden, wodurch die Komplexität des benötigten Werkzeugs erheblich reduziert werden kann.

Durch die Verwendung eines Faltenbalgs 23, 33 kann zudem die Oberfläche der Ausbuchtungen 20, 30 vergrössert, und damit auch die Wärmeableitung aus der Installationsdose 1 vergrössert werden. Dadurch kann die Betriebstemperatur von im ersten Installationsraum 17 angeordneten Geräten (nicht gezeigt) gesenkt, und damit sowohl deren Lebenserwartung, als auch jene der Installationsdose 1 erhöht werden.

Wie in **Fig. 12** und **14** gezeigt, weist diese dritte erfindungsgemässe Ausführungsform einer Installationsdose 1 ein flächiges Gerüstelement 13 auf, das sich entlang der Dosenwand 11 erstreckt, und so die Steifigkeit der Installationsdose wesentlich erhöht.

Wie in **Fig. 15** ersichtlich ist, ist der Dosenboden 14 der gezeigten dritten Ausführungsform einer erfindungsgemässen Installationsdose 1 wie auch bei der in **Fig. 1** bis **8** gezeigten ersten Ausführungsform gewellt. Dadurch kann einerseits die Wärmeableitung von der Installationsdose 1 an die Umgebung erhöht werden, andererseits aber auch die mechanische Steifigkeit sowohl des Dosenbodens 14, als auch des gesamten Dosengehäuses 10 erhöht werden.

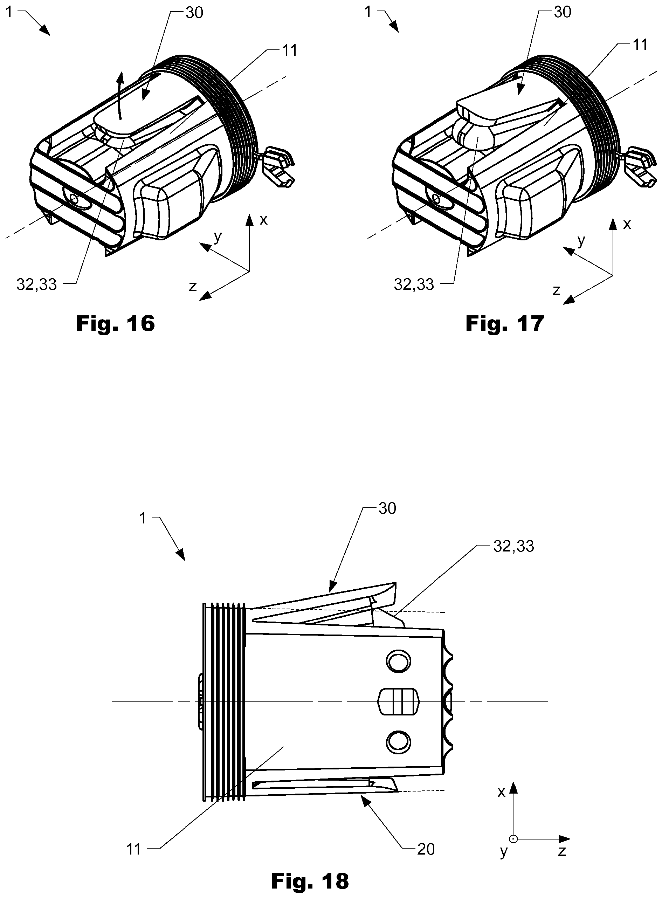

**Fig. 16** und **17** zeigen schematisch wie eine zweite Ausbuchtung 30 von der ersten Stellung (**Fig. 16**) in die zweite Stellung (**Fig. 17**) gebracht wird, indem der Faltenbalg 33 deformiert wird. Die zweite Ausbuchtung ragt in dieser zweiten Stellung stärker von der übrigen Dosenwand 11 ab, wie durch die unterbrochenen Linien in **Fig. 18** illustriert wird, wo sich die erste Ausbuchtung 20 in der ersten und die zweite Ausbuchtung 30 in der zweiten Stellung befinden.

### BEZEICHNUNGSLISTE

- 1: Installationsdose
- 10: Dosengehäuse
- 11: Dosenwand
- 12: Gerüst
- 13: Flächiges Gerüstelement
- 14: Dosenboden
- 15: Einbuchtung
- 16: Einbuchtung
- 17: Installationsraum
- 18: Einbauöffnung
- 20: Erste Ausbuchtung
- 21: Gelenk
- 22: Verformungsbereich
- 23: Faltenbalg
- 24: Aufnahmebereich (Faltentasche)
- 25: Seitenwand
- 30: Zweite Ausbuchtung
- 31: Gelenk
- 32: Verformungsbereich
- 33: Faltenbalg
- 34: Aufnahmebereich (Faltentasche)
- 35: Seitenwand
- 40: Öffnung (mit Membran)
- 41: Membran (heraustrennbar)
- 42: Kabelanschlussöffnung (offen)
- 43: Stöpsel
- 44: Erste Stöpselhälfte
- 45: Zweite Stöpselhälfte
- 46: Steg
- 50: Blende (eines Geräts)
- 51: Befestigungsvorrichtung
- 52: Bügel (zum Klemmen)
- 53: Federelement
- 60: Dosennebenkörper
- 61: Zweiter Installationsraum / Aufnahmeraum
- F: Kraft
- α: Winkel

## Patentansprüche

1. Installationsdose (1) für elektrische oder elektronische Geräte (50) aufweisend
a. ein Dosengehäuse (10) umfassend
b. eine Dosenwand (11) mit einem daran anschliessenden Dosenboden (14), wobei
c. die Dosenwand (11) und der Dosenboden (14) einen über eine Einbauöffnung (18) zugänglichen ersten Installationsraum (17) zur wenigstens teilweisen Aufnahme eines elektrischen oder elektronischen Geräts (50) umgeben
**dadurch gekennzeichnet, dass**
d. an der Dosenwand (11) eine erste Ausbuchtung (20) und eine zweite Ausbuchtung (30) angeordnet sind, die Teil des ersten Installationsraums (17) sind
e. die jeweils zwischen einer ersten inneren Stellung und einer zweiten äusseren Stellung, in der die erste und/oder die zweite Ausbuchtung (20, 30) mit Bezug auf die erste innere Stellung seitlich nach aussen steht, bewegbar sind
f. die erste und die zweite Ausbuchtung (20, 30) bezüglich dem ersten Installationsraum (17) diametral zueinander angeordnet sind,
g. die erste und/oder die zweite Ausbuchtung (20, 30) einen Verformungsbereich (22, 32) aufweist, der so eingerichtet ist, dass er sich unter radialer Kraftanwendung nach aussen verformen kann, und dass
h. der Verformungsbereich (22, 32) einen Faltenbalg (23, 33) aufweist.

2. Installationsdose (1) gemäss Anspruch 1, **dadurch gekennzeichnet, dass** der Verformungsbereich (22, 32) wenigstens teilweise aus einem weichelastischen Kunststoff gefertigt ist.

3. Installationsdose (1) gemäss Anspruch 2, **dadurch gekennzeichnet, dass** der Verformungsbereich (22, 32) wenigstens teilweise aus einem starrem Kunststoff gefertigt ist.

4. Installationsdose (1) gemäss einem der Ansprüche 1 bis 3, **dadurch gekennzeichnet, dass** die erste und/oder die zweite Ausbuchtung (20, 30) ein Gelenk (21, 31) aufweist, das eine Abwinkelung der ersten und/oder zweiten Ausbuchtung (20, 30) zu einer Hauptachse des Dosengehäuses (10) bewirkt, wenn die erste und/oder zweite Ausbuchtung (20, 30) von der ersten in die zweite Stellung gebracht wird.

5. Installationsdose (1) gemäss einem der Ansprüche 1 bis 3, **dadurch gekennzeichnet, dass** die erste und/oder zweite Ausbuchtung (20, 30) derart deformierbar ausgestaltet ist, dass sie von der ersten Stellung, bei welcher die erste und/oder zweite Ausbuchtung (20, 30) wenigstens teilweise im Inneren des ersten Installationsraums (17) liegt in die zweite Stellung, bei welcher die erste und/oder zweite Ausbuchtung (20, 30) seitlich von der Dosenwand (11) absteht, umstülpbar ist.

6. Installationsdose (1) gemäss einem der vorangehenden Ansprüche **dadurch gekennzeichnet, dass** die Installationsdose (1) im Innenraum (17) hinterschnittfrei ausgestaltet ist.

7. Installationsdose (1) gemäss einem der vorangehenden Ansprüche, **dadurch gekennzeichnet, dass** die erste und/oder zweite Ausbuchtung (20, 30) wenigstens bereichsweise aus weichelastischem Kunststoff hergestellt ist.

8. Installationsdose (1) gemäss einem der vorangehenden Ansprüche, **dadurch gekennzeichnet, dass** das Dosengehäuse (10) aus flexiblem Kunststoff besteht und ein Gerüst (12) aus starrem Kunststoff aufweist.

9. Installationsdose (1) gemäss Anspruch 8, **dadurch gekennzeichnet, dass** das Gerüst (12) ein flächiges Gerüstelement (13) aufweist, das sich entlang der Dosenwand (11) in Umfangsrichtung des Dosengehäuses (10) über zwischen 60° und 180°, insbesondere zwischen 80° und 100°, des Gesamtumfangs der Dosenwand (11) erstreckt.

10. Installationsdose (1) gemäss einem der vorangehenden Ansprüche, **dadurch gekennzeichnet, dass** das Dosengehäuse (10) wenigstens eine Öffnung (40) aufweist, die durch eine heraustrennbare Membran (41) aus weichelastischen Kunststoff verschlossen ist.

11. Installationsdose (1) gemäss einem der vorangehenden Ansprüche, **dadurch gekennzeichnet, dass** das Dosengehäuse (11) einen seitlich abstehenden Dosennebenkörper (60) aufweist, welcher einen zweiten Installationsraum (61) umgibt, wobei der Dosennebenkörper (60) deformierbar ausgestaltet ist, derart, dass er ins Innere des ersten Installationsraumes (17) des Dosengehäuses (10) umstülpbar ist.

## Claims

1. Installation box (1) for electrical or electronic devices (50), comprising
a. a box housing (10) comprising
b. a box wall (11) with a box base (14) connected to it, wherein
c. the box wall (11) and the box base (14) surround a first installation space (17), which is accessible via an installation opening (18), for at least partially receiving an electrical or electronic device (50),
**characterized in that**
d. a first bulge (20) and a second bulge (30) are arranged on the box wall (11), which bulges are part of the first installation space (17)
e. and can each be moved between a first inner position and a second outer position, in which the first and/or the second bulge (20, 30) project/projects laterally outward with respect to the first inner position,
f. the first and the second bulge (20, 30) are arranged diametrically opposite each other with respect to the first installation space (17),
g. the first and/or the second bulge (20, 30) comprise/comprises a deformation region (22, 32) which is designed such that it can deform outward with the application of radial force, and **in that**
h. the deformation region (22, 32) comprises a set of folding bellows (23, 33).

2. Installation box (1) according to Claim 1, **characterized in that** the deformation region (22, 32) is manufactured at least partially from a soft-elastic plastic.

3. Installation box (1) according to Claim 2, **characterized in that** the deformation region (22, 32) is produced at least partially from a rigid plastic.

4. Installation box (1) according to one of Claims 1 to 3, **characterized in that** the first and/or the second bulge (20, 30) comprise/comprises a joint (21, 31) which angles the first and/or the second bulge (20, 30) with respect to a main axis of the box housing (10) when the first and/or the second bulge (20, 30) are/is moved from the first position to the second position.

5. Installation box (1) according to one of Claims 1 to 3, **characterized in that** the first and/or the second bulge (20, 30) is designed to be deformable in such a way that it can be everted from the first position, in which the first and/or the second bulge (20, 30) are/is situated at least partially in the interior of the first installation space (17), to the second position, in which the first and/or the second bulge (20, 30) project/projects laterally from the box wall (11).

6. Installation box (1) according to one of the preceding claims, **characterized in that** the installation box (1) is designed without undercuts in the interior space (17).

7. Installation box (1) according to one of the preceding claims, **characterized in that** the first and/or the second bulge (20, 30) are/is produced at least in regions from soft-elastic plastic.

8. Installation box (1) according to one of the preceding claims, **characterized in that** the box housing (10) consists of flexible plastic and has a frame (12) composed of rigid plastic.

9. Installation box (1) according to Claim 8, **characterized in that** the frame (12) has a flat frame element (13) which extends along the box wall (11) in the circumferential direction of the box housing (10) over between 60° and 180°, in particular between 80° and 100°, of the total circumference of the box wall (11).

10. Installation box (1) according to one of the preceding claims, **characterized in that** the box housing (10) comprises at least one opening (40) which is closed by a removable membrane (41) composed of soft-elastic plastic.

11. Installation box (1) according to one of the preceding claims, **characterized in that** the box housing (11) comprises a laterally projecting box auxiliary body (60) which surrounds a second installation space (61), wherein the box auxiliary body (60) is designed in a deformable manner in such a way that it can be everted into the interior of the first installation space (17) of the box housing (10).

## Revendications

1. Boîtier d'installation (1) pour appareils électriques ou électroniques (50), présentant
a. un corps de boîtier (10) comprenant
b. une paroi de boîtier (11) avec un fond de boîtier (14) s'y raccordant, où
c. la paroi de boîtier (11) et le fond de boîtier (14) entourant un premier espace d'installation (17) accessible par l'intermédiaire d'une ouverture de montage (18) pour recevoir au moins partiellement un appareil électrique ou électronique (50),
**caractérisé en ce que**
d. sur la paroi de boîtier (11), sont agencés un premier renflement (20) et un deuxième renflement (30) qui font partie du premier espace d'installation (17),
e. qui peuvent respectivement être déplacés entre une première position intérieure et une deuxième position extérieure, dans laquelle le premier et/ou le deuxième renflement (20, 30) se trouvent latéralement vers l'extérieur par rapport à la première position intérieure,
f. le premier et le deuxième renflement (20, 30) sont agencés de manière diamétralement opposée l'un par rapport à l'autre par rapport au premier espace d'installation (17),
g. le premier et/ou le deuxième renflement (20, 30) présentent une zone de déformation (22, 32), qui est conçue de telle sorte qu'elle peut se déformer vers l'extérieur sous l'application d'une force radiale, et **en ce que**
h. la zone de déformation (22, 32) présente un soufflet (23, 33).

2. Boîtier d'installation (1) selon la revendication 1, **caractérisé en ce que** la zone de déformation (22, 32) est fabriquée au moins partiellement en une matière plastique élastique souple.

3. Boîtier d'installation (1) selon la revendication 2, **caractérisé en ce que** la zone de déformation (22, 32) est fabriquée au moins partiellement en une matière plastique rigide.

4. Boîtier d'installation (1) selon l'une quelconque des revendications 1 à 3, **caractérisé en ce que** le premier et/ou le deuxième renflement (20, 30) présentent une articulation (21, 31), qui provoque une angulation du premier et/ou du deuxième renflement (20, 30) par rapport à un axe principal du corps de boîtier (10) lorsque le premier et/ou le deuxième renflement (20, 30) sont amenés de la première à la deuxième position.

5. Boîtier d'installation (1) selon l'une quelconque des revendications 1 à 3, **caractérisé en ce que** le premier et/ou le deuxième renflement (20, 30) sont conçus sous forme déformable de telle sorte qu'ils peuvent être retournés de la première position, dans laquelle le premier et/ou le deuxième renflement (20, 30) se trouvent au moins partiellement à l'intérieur du premier espace d'installation (17), dans la deuxième position, dans laquelle le premier et/ou le deuxième renflement (20, 30) font saillie latéralement de la paroi de boîtier (11).

6. Boîtier d'installation (1) selon l'une quelconque des revendications précédentes, **caractérisé en ce que** le boîtier d'installation (1) est conçue sans contre-dépouille dans l'espace intérieur (17).

7. Boîtier d'installation (1) selon l'une quelconque des revendications précédentes, **caractérisé en ce que** le premier et/ou le deuxième renflement (20, 30) sont réalisés au moins par zones en matière plastique élastique souple.

8. Boîtier d'installation (1) selon l'une quelconque des revendications précédentes, **caractérisé en ce que** le corps de boîtier (10) est constitué de matière plastique flexible et présente une ossature (12) en matière plastique rigide.

9. Boîtier d'installation (1) selon la revendication 8, **caractérisé en ce que** l'ossature (12) présente un élément d'ossature plat (13), qui s'étend le long de la paroi de boîtier (11) dans la direction périphérique du corps de boîtier (10) sur entre 60° et 180°, notamment entre 80° et 100°, de la circonférence totale de la paroi de boîtier (11).

10. Boîtier d'installation (1) selon l'une quelconque des revendications précédentes, **caractérisé en ce que** le corps de boîtier (10) présente au moins une ouverture (40), qui est fermée par une membrane détachable (41) en matière plastique élastique souple.

11. Boîtier d'installation (1) selon l'une quelconque des revendications précédentes, **caractérisé en ce que** le corps de boîtier (11) présente un corps secondaire de boîtier (60) faisant saillie latéralement, qui entoure un deuxième espace d'installation (61), le corps secondaire de boîtier (60) étant conçu sous forme déformable, de telle sorte qu'il peut être retourné à l'intérieur du premier espace d'installation (17) du corps de boîtier (10).
